# EUROPÄISCHE PATENTANMELDUNG

(11) **EP 1 031 996 A2**
(43) Veröffentlichungstag der Anmeldung: **30.08.2000**
(21) Anmeldenummer: 00103667.2
(22) Anmeldetag: 22.02.2000
(51) Int. Cl.: G12B 5/00

(54) **Verstellbare Baugruppe**

(30) Priorität: 27.02.1999 DE 19908554
(71) Anmelder: Carl Zeiss, 89518 Heidenheim (Brenz) (DE); Carl-Zeiss-Stiftung trading as Carl Zeiss, 89518 Heidenheim (Brenz) (DE)
(72) Erfinder: Holderer, Hubert, 89551 K-nigsbronn (DE); R-mmer, Peter, 73447 Oberkochen (DE); Trunz, Michael, 73479 Pfahlheim (DE); Geuppert, Bernhard, 73431 Aalen (DE); Polzer, Thomas, 73447 Oberkochen (DE); Dries, Johan, c/o Philips CFT-Mechatronics, 5600 MD Eindhoven (NL); Timmers, Hugo, c/o Philips CFT-Mechatronics, 5600 MD Eindhoven (NL); Post, Albert, c/o Philips CFT-Mechatronics, 5600 MD Eindhoven (NL)
(74) Vertreter: Lorenz, Werner, Dr.-Ing.

(57) **Zusammenfassung**

Eine verstellbare Baugruppe umfaßt eine Basis (Fassungsring 1), einen verstellbaren Teil (Innenring 3), einen Hebel (Kipphebel 5) und einen Antrieb (Antriebsglied 6). Der Hebel (Kipphebel 5) ist mit der Basis (Fassungsring 1) und dem verstellbaren Teil (Innenring 3) über zwei parallel orientierte elastische Festkörperdrehgelenke (7,8) verbunden. Eines der beiden Festkörperdrehgelenke (7) ist in zwei Drehgelenkteile (7a,7b) aufgeteilt, die entlang ihrer Drehachse (9) seitwärts versetzt beidseits des zweiten Festkörperdrehgelenkes (8) angeordnet sind.

## Beschreibung

Die Erfindung betrifft eine verstellbare Baugruppe nach dem Oberbegriff von Anspruch 1 und eine Optik-Fassung als Ausführungsform der verstellbaren Baugruppe.

Bei der zur Zeit bekannten Fassungstechnik von optischen Elementen, z.B. von Linsen, führen Fertigungstoleranzen an der Verbindungsstelle des optischen Elementes mit der Fassung und im Fassungsflansch bei der Montage des optischen Elementes in der Fassung und der Montage des gefaßten optischen Elementes in ein Objektiv zu einer Verspannung des optischen Elementes. Wird dabei das optische Element mit Hilfe eines Zwischen- oder Innenringes in Form einer 3-Punkt-Lagerung statisch bestimmt mit dem Fassungsflansch verbunden, so führen die vorstehend genannten zwangsläufigen Toleranzen zu einer Verkippung des optischen Elements gegenüber der optischen Achse.

Aus der DD 278 207 A1 ist eine Justiereinrichtung für ein optisches Element bekannt, durch die die optischen Achsen einzelner optischer Elemente gegenüber der mechanischen Achse eines Objektives ausgerichtet werden können. Durch die Justierelemente lassen sich jedoch Abweichungen der optischen Achsen von optischen Elementen von der Achse des Objektives nicht mit einer heute geforderten hohen Genauigkeit korrigieren, wie dies z.B. für Objekte in der Halbleiterlitographie erforderlich ist.

Die JP 10-54 932 zeigt eine Fassungsverbindung mit einer Hebeluntersetzung in mehrteiliger Ausführung.

In der US-PS 5 428 482 ist eine Verbindung zwischen einer Fassung und einem Innenring, auf welchem eine Linse als optisches Element gelagert ist, beschrieben, wobei die Verbindung durch über den Umfang verteilt angeordnete Festkörperdrehgelenke erfolgt.

Der vorliegenden Erfindung liegt die Aufgabe zugrunde, eine spannungsentkoppelte Baugruppe zu schaffen, insbesondere für die Fassungstechnik eines optischen Elementes, bei der ein durch Fertigungs- und Montagetoleranzen verkipptes verstellbares Teil, wie z.B. eine Linse als optischem Element, durch einen Antrieb bzw. Manipulatoren in die Soll-Lage zurückgekippt werden kann.

Erfindungsgemäß wird diese Aufgabe durch die im kennzeichnenden Teil von Anspruch 1 genannten Merkmale gelöst.

Eine Ausführungsform bzw. eine Einsatzmöglichkeit für die verstellbare Baugruppe ist in Anspruch 3 aufgezeigt.

Durch die erfindungsgemäße Lösung läßt sich ein sehr hohes Übersetzungsverhältnis ins Feine durch den Antrieb auf sehr kleinem Raum für das verstellbare Teil, z.B. einem optischen Element, erreichen. Dies erfolgt dabei dadurch, daß eines der beiden Festkörperdrehgelenke in zwei Drehgelenkteile aufgeteilt wird, die entlang ihrer Drehachse seitwärts versetzt beidseits des zweiten Festkörperdrehgelenkes angeordnet sind. Auf diese Weise läßt sich der Abstand zwischen den Festkörperdrehgelenken, der das Übersetzungsverhältnis bestimmt, deutlich reduzieren.

Insbesondere bei einem Einsatz als Optik-Fassung lassen sich dadurch mit einem entsprechend großen Übersetzungsverhältnis und einer daraus resultierenden hohen Genauigkeit x/z-Richtungstransformationen erzeugen, wobei dies durch eine den Platzverhältnissen im Fassungsring angepaßte raumsparende Konstruktion erfolgt.

Vorteilhafte Ausgestaltungen und Weiterbildungen der Erfindung ergeben sich aus den Unteransprüchen und aus den nachfolgend anhand der Zeichnung prinzipmäßig beschriebenen Ausführungsbeispielen.

Es zeigt:
- Figur 1: eine Optik-Fassung als verstellbare Baugruppe in der Draufsicht;
- Figur 2: eine schematische Darstellung eines Festkörperdrehgelenkes als Hebelgetriebe mit einem Kipphebel;
- Figur 3: ausschnittsweise eine Draufsicht auf die Optik-Fassung nach der Figur 1 mit einem Querschnitt in Höhe eines Verstellgliedes eines Antriebs nach der Linie III-III der Fig. 4;
- Figur 4: einen Schnitt nach der Linie IV-IV der Figur 3;
- Figur 5: ausschnittsweise eine Draufsicht auf eine weitere Ausführungsform im Bereich der Festkörperdrehgelenke.

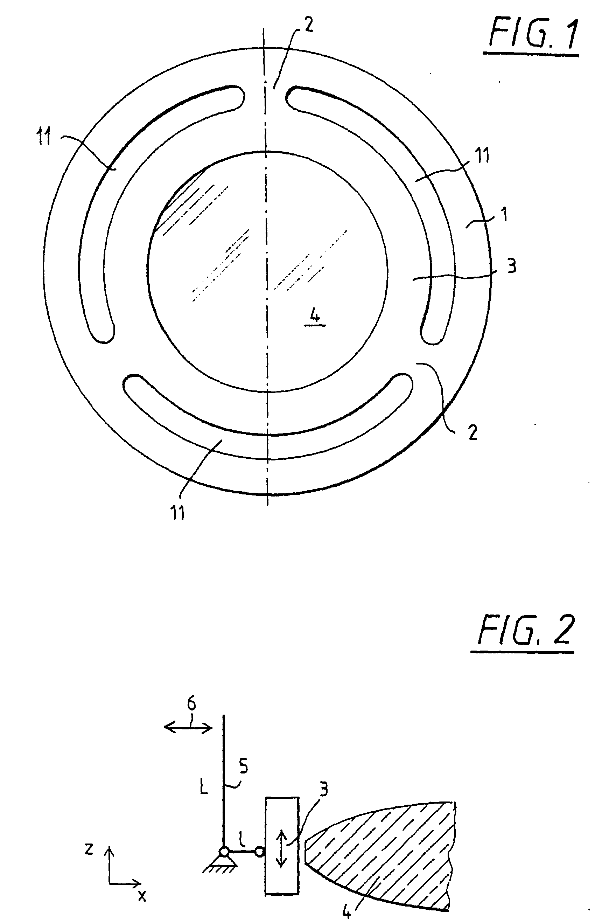

Die in der Figur 1 prinzipmäßig dargestellte Optik-Fassung weist als Fassung einen Fassungsring 1 auf, der über drei Festkörpergelenke 2 mit einem Innenring 3 verbunden ist. Der Fassungsring 1 und der Innenring 3 können einstückig ausgebildet sein. Der Innenring 3 trägt als optisches Element eine Linse 4.

Durch die Verbindung des Flanschringes 1 mit dem Innenring 3, auf dem die Linse 4 montiert ist, wird über die drei Festkörpergelenke 2 eine Spannungsentkoppelung erreicht.

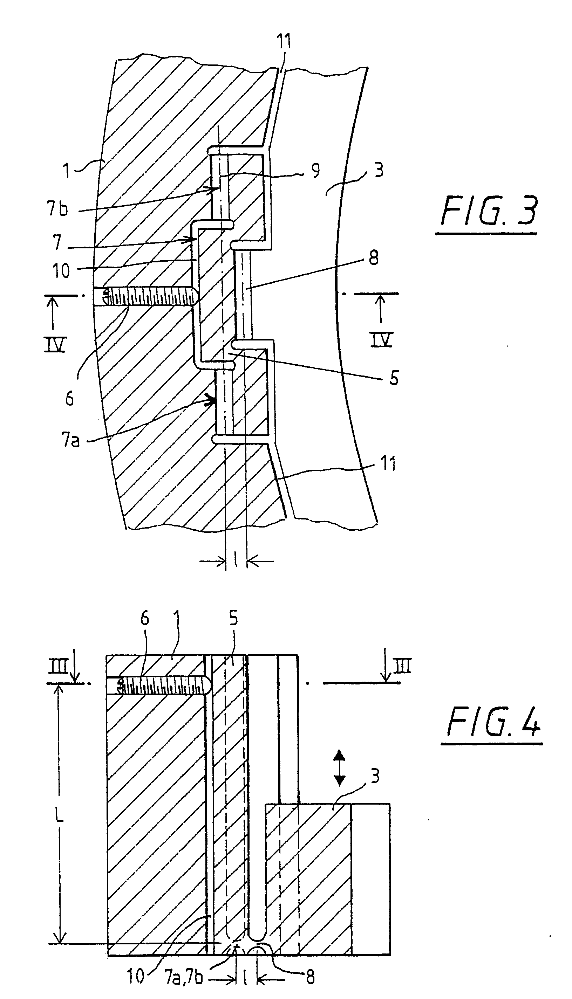

Eine Verstellmöglichkeit wird nun dadurch geschaffen, daß ein oder mehrere Festkörpergelenke 2 in Form eines Hebelgetriebes ausgebildet werden, das im wesentlichen aus einem Kipphebel 5 besteht. Wie aus der Figur 2 ersichtlich ist, greift ein in den Figuren 3 bis 5 dargestelltes Antriebsglied 6 als Manipulator bzw. Antrieb an einem Ende des Kipphebels 5, der eine L-Form aufweist, an.

Durch den Kipphebel 5 wird eine Übersetzung l/L und eine Umkehr der Bewegungsrichtung aus der x-Richtung in die z-Richtung (optische Achse) erreicht. Wie ersichtlich, hängt somit das Übersetzungsverhältnis unter anderem davon ab, wie klein der Hebelarm l gemacht werden kann. Auf welche Weise dies erreicht werden kann ist aus den Figuren 3 bis 5 erkennbar, wozu eines oder mehrere der in der Figur 1 schematisch dargestellten Festkörpergelenke 2 entsprechend als Hebelgetriebe mit zwei Festkörperdrehgelenken 7 und 8 ausgebildet ist, wobei das Festkörperdrehgelenk 7 in zwei Drehgelenkteile 7a und 7b aufgeteilt ist, die entlang ihrer Drehachse 9 seitlich versetzt beidseits des dazwischenliegenden Festkörperdrehgelenkes 8 angeordnet sind. Die Festkörperdrehgelenke 7 und 8 sind parallel orientiert und entsprechend elastisch, um eine Verstellmöglichkeit zu ergeben.

Das Festkörperdrehgelenk 7 mit den beiden Drehgelenkteilen 7a und 7b ist außenseitig mit dem Fassungsring 1 verbunden. Ein Schlitz 10 in U-Form stellt eine Trennung des Kipphebels 5 von dem Fassungsring 1 dar. Am oberen Ende des Kipphebels 5 greift über den Schlitz 10 das Antriebsglied 6 an dem Kipphebel 5 an.

Das Festkörperdrehgelenk 8 ist innenseitig mit dem Innenring 3 verbunden und außenseitig am unteren Ende, d.h. an dem von dem Angriffspunkt des Antriebsgliedes 6 abgewandten Ende an dem Kipphebel 5 angelenkt. Durch einen umlaufenden Schlitz 11, der nur durch die Festkörperdrehgelenke 7 bzw. 8 unterbrochen ist, erfolgt die Entkoppelung des Innenringes 3 von dem Fassungsring 1.

Wie aus den Figuren 3 und 4 ersichtlich ist, können die Festkörperdrehgelenke 7 und 8 aufgrund der Aufteilung des Festkörperdrehgelenkes 7 in die beiden Drehgelenkteile 7a und 7b deutlich näher zueinander gerückt werden, als dies im Vergleich zu einer nicht aufgeteilten Form möglich wäre. Das Maß l kann entsprechend kleiner gewählt werden, so daß das Übersetzungsverhältnis l/L bei einer Betätigung des Antriebsgliedes 6 durch einen nicht näher dargestellten Antrieb zur Verschiebung des Innenringes 3 und damit des optischen Elements 4 in z-Richtung sehr groß bzw. feinfühlig wird.

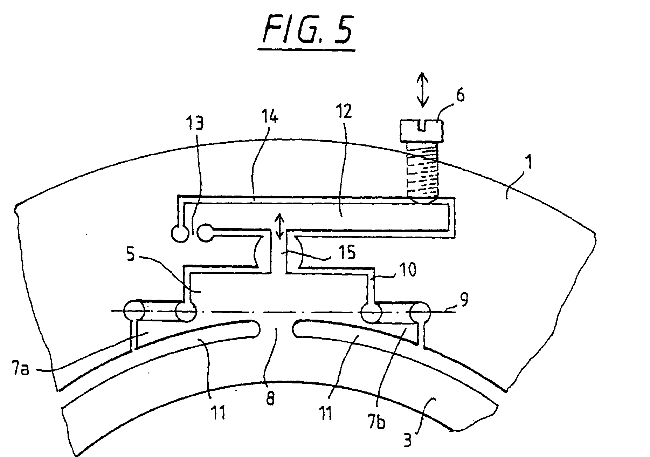

Soll das Übersetzungsverhältnis nochmals erhöht werden, so läßt sich dies mit einer Ausgestaltung nach der Figur 5 erreichen.

Wie ersichtlich, ist dabei zwischen dem Antriebsglied 6 und dem Kipphebel 5 eine weitere Hebelübersetzung mit einem Hebel 12 angeordnet. Der Hebel 12 ist an einem Ende als Lagerungsstelle über ein elastisches Festkörperdrehgelenk 13 mit dem Fassungsring 1 verbunden, während ansonsten der Hebel 12 über einen Schlitz 14 von dem Fassungsring 1 getrennt ist. Der Schlitz 14 muß selbstverständlich eine derartige Breite besitzen, daß bei einer Betätigung durch das Antriebsglied 6 entsprechende Bewegungen des Hebels 12 möglich sind. An dem von dem Ende mit dem Festkörperdrehgelenk 13 abgewandten Endbereich greift das Antriebsglied 6 an. Die weitere Hebelübersetzung ist damit monolitisch bzw. einstückig mit der Fassung 1. Über eine Verbindungsstelle 15 in Form eines Zwischenarmes ist der Hebel mit dem Kipphebel 5 verbunden. Um die Übersetzungserhöhung zu erreichen, wird man die Verbindungsstelle 15 näher an dem Ende mit dem Festkörperdrehgelenk 13 als an dem Angriffspunkt des Antriebsgliedes 6 anordnen. Die Höhe der Übersetzung richtet sich dabei nach den gewählten Abständen.

Selbstverständlich kann die Verbindungsstelle 15 auch anders ausgebildet sein. Dies gilt z.B. für die Angriffsdrehrichtung und dessen Lage

Bei Betätigung des Betätigungsgliedes 6 erfährt der Hebel 12 eine entsprechende Auslenkung, wobei die Auslenkkraft - entsprechend übersetzt - über die Verbindungsstelle 15 auf den Kipphebel 5 weitergeleitet wird, womit in bekannter Weise entsprechend dem Ausführungsbeispiel nach den Figuren 3 und 4 eine Verschiebung des optischen Elements 4 in z-Richtung, d.h. in Richtung der optischen Achse erfolgt. Auf diese Weise kann ein verkipptes optisches Element wieder in die Soll-Lage zurückgekippt werden.

## Patentansprüche

1. Verstellbare Baugruppe umfassend eine Basis, einen verstellbaren Teil, wenigstens einen Hebel und einen Antrieb, wobei der wenigstens eine Hebel mit der Basis und dem verstellbaren Teil über zwei parallel orientierte elastische Festkörperdrehgelenke verbunden ist, dadurch gekennzeichnet, daß eines der beiden Festkörperdrehgelenke (7) in zwei Drehgelenkteile (7a,7b) aufgeteilt ist, die entlang ihrer Drehachse (9) seitwärts versetzt beidseits des zweiten Festkörperdrehgelenkes (8) angeordnet sind.

2. Verstellbare Baugruppe nach Anspruch 1, dadurch gekennzeichnet, daß der Antrieb (6) an einem zwischen den beiden Drehgelenkteilen (7a,7b) des aufgeteilten Festkörperdrehgelenkes (7) angeordneten Kipphebel (5) angreift.

3. Verstellbare Baugruppe nach Anspruch 2, dadurch gekennzeichnet, daß sich an dem von dem Angriffspunkt des Antriebes (6) abgewandten Ende des Kipphebels (5) das zweite Festkörperdrehgelenk (8) befindet.

4. Optik-Fassung, ausgeführt als verstellbare Baugruppe nach Anspruch 1, 2 oder 3, wobei die Basis eine Fassung oder ein mit einer Fassung verbundenes Teil und das verstellbare Teil ein mit einem optischen Glied verbundener Innenring darstellt, gekennzeichnet durch mindestens einen Kipphebel (5) und einen in der Fassung (1) oder in einem mit der Fassung verbundenen Teil angeordneten Antrieb (6) durch den der Innenring (3) um wenigstens eine Achse kippbar ist.

5. Optik-Fassung nach Anspruch 4, dadurch gekennzeichnet, daß drei oder vier Kipphebel (5) und Antriebe (6) über den Umfang verteilt angeordnet sind.

6. Optik-Fassung nach Anspruch 4 oder 5, dadurch gekennzeichnet, daß zwischen dem Antrieb (6) und den Festkörperdrehgelenken (7,8) eine weitere Hebelübersetzung vorgesehen ist.

7. Optik-Fassung nach Anspruch 6, dadurch gekennzeichnet, daß die weitere Hebelübersetzung mit einem Hebel (12) versehen ist, der in der Fassung (1) gelagert ist und an dem der Antrieb (6) angreift.

8. Optik-Fassung nach Anspruch 7, dadurch gekennzeichnet, daß der Hebel (12) an einem Ende in der Fassung (1) gelagert ist und an dem von dem Lagerungsende abgewandten Ende der Antrieb (6) angreift.

9. Optik-Fassung nach Anspruch 8, dadurch gekennzeichnet, daß der Kipphebel (5) an einer zwischen der Lagerstelle des Hebels (12) und dem Angriffspunkt des Antriebes (6) gelegenen Verbindungsstelle (15) mit dem Hebel (12) verbunden ist.

10. Optik-Fassung nach Anspruch 7, 8 oder 9 dadurch gekennzeichnet, daß die Lagerungsstelle des Hebels (12) als drittes Festkörpergelenk (13) ausgebildet ist.

11. Optik-Fassung nach einem der Ansprüche 6 bis 10, dadurch gekennzeichnet, daß die weitere Hebelübersetzung mit der Fassung (1) monolitisch ist.
